# EUROPEAN PATENT SPECIFICATION

(11) **EP 2 766 601 B1**
(45) Date of publication and mention of the grant of the patent: **28.10.2015**
(21) Application number: 12816357.3
(22) Date of filing: 07.12.2012
(51) Int. Cl.: F03D 9/02, F03C 1/02

(54) **WIND TURBINE GENERATOR**
WINDENERGIEANLAGE
GÉNÉRATEUR À TURBINE ÉOLIENNE

(43) Date of publication of application: 20.08.2014
(73) Proprietor: MITSUBISHI HEAVY INDUSTRIES, Ltd., Tokyo 108-8215 (JP)
(72) Inventor: LAVENDER, Jack, Loanhead, EH20 9TB (GB); NISHIDA, Hideaki, Tokyo, 108-8215 (JP); OCHIAI, Hiroyasu, Tokyo, 108-8215 (JP); VOLLER, Gordon, Loanhead, EH20 9TB (GB)
(74) Representative: Hindle, Alistair Andrew
(86) International application number: PCT/IB2012/057078
(87) International publication number: WO 2014/087201

(56) References cited:
- WO-A1-2008/095088
- US-A1- 2012 061 969
- US-A1- 2012 063 929

## Description

### TECHNICAL FIELD

The present invention relates to a wind turbine generator using a fluid working machine, such as a hydraulic motor.

### BACKGROUND ART

In recent years, from a perspective of preserving the environment, it is becoming popular to use a power generating apparatus of renewable energy type such as a wind turbine generator utilizing wind power. In the wind turbine generator, kinetic energy of the wind is converted to rotation energy of the rotor and the rotation energy of the rotor is then converted into electric power by the generator.

In this type of wind turbine generator, a step-up gear was often used as a drive train. However, with increasing size of the wind turbine generator, a wind turbine generator equipped with a hydraulic transmission using a fluid working machine such as a hydraulic motor is becoming popular in the light of weight and cost thereof.

As a common fluid working machine, disclosed in Patent Literature 1 is a hydraulic motor having a plurality of drive rods arranged along a circumferential direction of an eccentric cam rotating with a rotation shaft. The drive rods are connected to corresponding pistons reciprocating in cylinders. In this hydraulic motor, by allowing an end of each drive rod to contact the eccentric cam, a reciprocating motion of the piston is converted into a rotation motion of the eccentric cam. Particularly, at one end of each drive rod, a holding member for holding a flange part is attached. And the flange part of the holding member attached to each drive rod, is fixed from outside by a ring member extending along the circumferential direction of the eccentric cam. In this manner, the eccentric cam is prevented from coming off from the eccentric cam so as to reduce wear of the drive rod and the eccentric cam, thereby extending lifetime of the fluid working machine.

In Patent Literature 2, disclosed is a fluid working machine equipped with a spring member for pressing an end of each drive rod against the eccentric cam. In this fluid working machine, an end of the spring member is fixed to a nearby component and thus, the contact between the drive rod and the eccentric cam is maintained, thereby reducing the wear of the drive rod and the eccentric cam.

Further, in Patent Literature 8, disclosed is a fluid working machine equipped with a connection member for physically connecting the drive rod and the eccentric cam so that the drive rod stays in contact with the eccentric cam.

Furthermore, in Patent Literature 4, disclosed is a fluid working machine for maintaining contact between the drive rod and the eccentric cam by pressing the drive rod to the eccentric cam with use of an elastic C-shaped member.

### CITATION LIST

### PATENT LITERATURE 1

US 4228595 B PATENT LITERATURE 2
US 4629401 B
   PATENT LITERATURE 3
DE 2915286 B
   PATENT LITERATURE 4
US 2006/0110276 A
US 2012/0063929 A1 relates to a hydraulic pump structure, which generates operating oil pressure to a hydraulic motor for generating electric power mounted on a main shaft of a wind turbine generator or a tidal current generator, and a method of mounting the hydraulic pump on the main shaft.

### SUMMARY OF INVENTION

### TECHNICAL PROBLEM

In order to reduce wear of the drive rod and the eccentric cam as well as damage of the drive rod and the eccentric cam from the backlash therebetween, it is important to manufacture each part with precision and to keep the proper pressing force so that the drive rod and the eccentric cam maintain contact with each other. However, manufacturing all of the parts with precision results in cost increase and, in order to keep the proper pressing force, a reasonable way of keeping the pressing force needs to be established.

In the fluid working machine of Patent Literature 1, the holding member provided at each drive rod is rigidly fixed by the ring member. Thus, if each of the parts is poorly manufactured, this creates a gap between the parts, leading to the wear of the parts.

Further, in Patent Literature 1, the gap between the parts is filled using elastic deformation of the ring member. However, during the operation of the working fluid machine, periodic elastic deformation of the ring member in accordance with a rotation phase of the eccentric cam can lead to a higher risk of fatigue fracture. This is far more evident in a fluid working machine rotating at high speed.

In the fluid working machine of Patent Literature 2, one end of the spring member is fixed. Thus, during the operation of the working fluid machine, the spring member is compressed or extended significantly in accordance with the rotation phase of the eccentric cam and accordingly the force of pressing the drive rod against the eccentric cam changes significantly. Thus, in spite of the maintained contact between the drive rod and the eccentric cam, the pressing force changes drastically. This is likely to cause the wear thereof.

In the fluid working machine disclosed in Patent Literature 3, the connecting rod is rigidly fixed to the eccentric cam by the connection member and thus, it is necessary to manufacture each member with precision.

In the fluid working machine disclosed in Patent Literature 4, the rotation of the eccentric cam causes the C-shaped member to deform significantly. The continuous deformation of the C-shaped member increases the risk of fatigue fracture.

In view of the above issues, at least one embodiment of the present invention is intended to provide a fluid working machine and a wind turbine generator which can reduce wear of parts and be produced at low cost.

### SOLUTION TO PROBLEM

According to one embodiment of the present invention, a wind turbine generator may include, but is not limited to:
a hub on which a blade is mounted;
a main shaft which is connected to the hub;
a hydraulic pump which is attached to the main shaft;
a hydraulic motor which is driven by pressurized oil supplied from the hydraulic pump; and
a generator which is coupled to the hydraulic motor, and
at least one of the hydraulic pump and the hydraulic motor is a fluid working machine which includes, but not limited to:
   an eccentric cam;
   a plurality of pistons arranged radially around the eccentric cam;
   a plurality of cylinders provided for the plurality of pistons, respectively, each of the pistons being configured to reciprocate along a radial direction of the eccentric cam by rotation of the eccentric cam;
   a plurality of drive rods which are provided for the plurality of cylinders, respectively, and each of which may include: a main part that extends along the axial direction of corresponding one of the cylinders; an engaging part that is formed at one end of the main part and is engaged with corresponding one of the pistons such that an angle of the main part with respect to the axial direction of the corresponding one of the cylinders is changeable; and a contact part that is formed at the other end of the main part and contacts the eccentric cam;
   a plurality of holding members each of which is arranged around the main part in a circumferential direction of the corresponding one of the cylinders and extends along the axial direction of the corresponding one of the cylinders;
   a plurality of pressing members which presses the holding members, respectively, outward in the radial direction of the eccentric cam; and
   at least one holding ring which is arranged on an outer circumferential side of the plurality of holding members in the radial direction of the eccentric cam to hold the plurality of holding members from an outside of the holding members.

In the above fluid working machine, a plurality of the pressing member is pressed up outwardly in the radial direction of the eccentric cam by the pressing members while being held inwardly by the holding ring. Thus, the drive rods are pressed against the eccentric cam by a reaction force from the pressing members. In this manner, the contact is maintained between the drive rods and the eccentric cam with the proper pressing force. Therefore, it is possible to reduce the wear of the drive rods as well as the wear of the eccentric cam.

Further, the holding ring is supported from the inside by the holding members being pressed up by the pressing members outwardly in the radial direction of the eccentric cam (the holding ring is not rigidly fixed to any particular part) and thus, the pressing force of each rod being pressed against the eccentric cam can be maintained at almost constant level, regardless of the rotation phase of the eccentric cam. In this manner, fluctuation of the pressing force against the eccentric cam is maintained at least and thus, it is possible to prevent the wear of the drive rod and the eccentric cam more effectively.

Further, by the elastic force of the pressing member, the gap generated between the parts can be filled. Therefore, it is unnecessary to manufacture each part with precision higher than necessary, thereby achieving lower manufacturing cost and also enhancing reliability and life cycle.

In one embodiment, each of the holding members may include a cylindrical part surrounding the main part and an inward flange part provided at one end of the cylindrical part on an outer circumferential side in the radial direction of the eccentric cam,
the contact part may have a diameter larger than the main part so that a stepped portion is formed between the contact part and the main part, and
each of the pressing members may be arranged in an annular space formed between an inner circumferential surface of the cylindrical part and an outer circumferential surface of the main part to press the inward flange part in a direction apart from the stepped portion.

In the above fluid working machine, the stepped portion is formed with a large diameter in the drive rod. Thus, the force transmitted between the eccentric cam and the drive can be effectively transmitted.

Further, the pressing member is arranged in the annular space covered by the cylindrical part. Thus, during the operation of the fluid working machine, it is possible to prevent the pressing member from interfering with nearby parts, thereby attaining desirable reliability of the machine.

In one embodiment, each of the holding members may include a cylindrical part surrounding the main part and an outward flange part provided at one end of the cylindrical part on an inner circumferential side in the radial direction of the eccentric cam, and
the at least one holding ring may hold the outward flange part of each of the holding members.

In the above fluid working machine, the outward flange part is provided at an inner end of the cylindrical part in the radial direction of the eccentric cam (on a side of the cylindrical part nearer to the eccentric cam). Thus, compared to the case where the outward flange part held by the holding member is formed at an outer end of the cylindrical part in the radial direction of the eccentric cam (on a side of the cylindrical part farther from the eccentric cam), the attitude of the holding member held by the holding ring is stable.

Further, by forming the outward flange part at the inner end of the cylindrical part in the radial direction of the eccentric cam (on the side of the cylindrical part nearer to the eccentric cam), it is possible to reduce the inner diameter of the holding ring for holding the outward flange part, thereby attaining a compact holding ring.

In an embodiment, each of the holding members may include a cylindrical part surrounding the main part and an outward flange part provided at one end of the cylindrical part on an inner circumferential side in the radial direction of the eccentric cam, and
the fluid working machine further may include a plurality of slide members each of which is provided between the holding ring and the outward flange part of corresponding one of the holding members.

In the above fluid working machine, as the holding ring is not fixed to the holding member and the holding ring moves relative to the holding member (the holding ring moves to some extent in the circumferential direction). In the above fluid working machine, to hold the holding member by the holding ring, the slide member is provided between the holding ring and the outward flange part where they contact with each other. As a result, it is possible to reduce the wear of the holding ring and the outward flange part, thereby attaching enhanced lifetime thereof.

In an embodiment, each of the slide members may be arranged around the cylindrical part and comprises at least one groove extending along the circumferential direction of the eccentric cam, and
the at least one holding ring may be fitted in the at least one groove.

In the above fluid working machine, the position of the holding ring is regulated by the groove formed in the slide member. Thus, during the operation of the hydrulic motor, the holding ring is prevented from coming off from the holding member, resulting in improved reliability of the machine.

In an embodiment, at least one groove may comprise a pair of grooves on both sides of the cylindrical part, and
the at least one holding ring may include a pair of holding rings which are fitted in the pair of grooves, respectively.

By holding the holding member by the holding ring from both sides of the cylindrical part in the above manner, the attitude of the holding member can be stable.

In an embodiment, each of the slide members may be fixed to the outward flange part of the corresponding one of the holding members by a clamp member or glue.

In the above fluid working machine, by fixing the slide member to the outward flange part of the holding member by a clamp member or glue, the slide member is kept on the holding member against a sliding force caused by the movement of the holding ring. Therefore, it is possible to enhance the life cycle.

In an embodiment, each of the slide members may be arranged around the holding member in a continuous fashion in the circumferential direction of the corresponding one of the cylinders.

In the above fluid working machine, by arranging the slide member over the entire outward flange part, it is possible to effectively reduce the wear of the holding ring and the holding member.

In an embodiment, the fluid working machine may comprise a metal insert between each slide member and the respective outward flange part. This reduces wear on the outward flange part of the holding member.

In an embodiment, each of slide members may be made of PEEK material.

In an embodiment, an inner passage may be formed in the piston and the drive rod to supply working fluid from the working chamber to a contact surface of the contact part with the eccentric cam.

In the above fluid working machine, the working fluid is supplied to the contact surface between the drive rod and the eccentric cam via the inner passage formed in the piston and the drive rod. The supplied working fluid forms a fluid film on the contact surface, thereby reducing the wear generated in the drive rod and the eccentric cam.

In an embodiment, an orifice may be provided in the inner passage to regulate a flow of the working fluid.

In the above fluid working machine, the flow of the operating oil to the contact surface may be regulated by the orifice so as to achieve desirable effect of wear reduction.

In an embodiment, the inner passage may include:
a first inner passage which is formed in the piston; and
a second inner passage which is formed in the drive rod and communicate with the first inner passage, the working fluid being supplied from the working chamber to the contact surface via the first and second inner passages, and
the first inner passage may have a greater cross-sectional area than the second inner passage.

In the above fluid working machine, the first inner passage has a greater cross-sectional area than the second inner passage. Thus, even when the drive rod is inclined with respect to the cylinder axis, it is possible to maintain the communication between the first inner passage and the second inner passage. As a result, it is possible to supply the working fluid to the contact surface regardless of the rotation phase of the eccentric cam, thereby reducing the wear of the contact surface effectively.

In an embodiment, a surface of the drive rod facing the eccentric cam may include a recessed portion which is surrounded by a stepped boundary around an opening of the inner passage and which is configured to function as a working fluid sump, the stepped boundary separating the recessed portion from the contact surface.

In the above fluid working machine, the surface of the drive rod facing the eccentric cam includes the working fluid sump. Thus, the working fluid stored in the working fluid sump is allowed to leak out to the contact surface via the inner passage. In this manner, the working fluid can spread effectively over the contact surface from the working fluid sump and thus, it is possible to reduce the wear in the contact surface more effectively.

In an embodiment, the working fluid sump may be formed so that a depth of the working fluid sump changes in a stepped manner in a rotation direction of the eccentric cam.

In the above fluid working machine, the depth of the working fluid sump changes in a stepped manner in a rotation direction of the eccentric cam. By this, it is possible to attain high strength of the contact part of the drive rod when the working fluid sump is formed by recessing the surface of the drive rod facing the eccentric cam.

In an embodiment, a surface of the drive rod facing the eccentric cam may include a groove to which the inner passage opens and which is configured to function as a working fluid sump.

In the above fluid working machine, the working fluid leaks out from the groove extending in a prescribed direction, thereby spreading over the contact surface. By this, the wear in the contact surface is effectively reduced

In an embodiment, the groove may surround a land.

In the above fluid working machine, the groove surrounds the land to form the working fluid sump and thus, the working fluid is positively introduced to the land surrounded by the groove. By this, the wear in the contact surface is effectively reduced.

In an embodiment, the engaging part may have a spherical shape.

In the above fluid working machine, the engaging part has a spherical shape. It is possible to engage the drive rod with the piston so that an angle of the drive rod is changeable with respect to the cylinder axis.

In an embodiment, the plurality of holding members and the holding ring may be made of metal.

In the above fluid working machine, by forming the holding members and the holding ring made of metal, it is possible to improve the reliability and the strength against repeated change of load caused by the movement of the eccentric cam rotating at high speed.

Preferably, the cylinders, within which the pistons reciprocate, have an internal diameter of greater than precisely 45 mm. Typically the cylinders have an internal diameter of greater than 46.0 mm.

Typically, the wind turbine generator has a base which is fixedly attached to the ground, which may for example be ground on shore or may be the sea bed.

### ADVANTAGEOUS EFFECTS OF INVENTION

In the above fluid working machine, a plurality of the pressing members is pressed up outwardly in the radial direction of the eccentric cam by the pressing members while being held inwardly by the holding ring. Thus, the drive rods are pressed against the eccentric cam by a reaction force from the pressing members. In this manner, the contact is maintained between the drive rods and the eccentric cam. Therefore, it is possible to reduce the wear of the drive rods as well as the wear of the eccentric cam.

Further, the holding ring is supported from the inside by the holding members being pressed up by the pressing members outwardly in the radial direction of the eccentric cam (the holding ring is not rigidly fixed to any particular part) and thus, the pressing force of each rod being pressed against the eccentric cam can be maintained at almost constant level, regardless of the rotation phase of the eccentric cam. In this manner, fluctuation of the pressing force against the eccentric cam is maintained at least and thus, it is possible to prevent the wear of the drive rod and the eccentric cam more effectively.

Further, the gap generated between the parts can be filled by the elastic force of the pressing member. Therefore, it is unnecessary to manufacture each part with precision higher than necessary, thereby achieving lower manufacturing cost.

### BRIEF DESCRIPTION OF DRAWINGS

Fig. 1 is a schematic view of an overall structure of a wind turbine generator.
Fig. 2 shows an inner structure of a hydraulic motor
Fig.3A shows a structure around a piston and a drive rod, which is taken in a radial direction of an eccentric cam from the outside.
Fig.3B shows the structure around the piston and the drive rod, which is taken in a circumferential direction of the eccentric cam.
Fig.3C shows the structure around the piston and the drive rod, which is taken in a rotational direction of the eccentric cam.
Fig. 4A is a view of a structure of a holding member taken in the radial direction of the eccentric cam from the outside.
Fig. 4B is a view of the structure of the holding member taken in the circumferential direction of the eccentric cam.
Fig. 4C is a view of the structure of the holding member taken in the rotational direction of the eccentric cam.
Fig. 5A shows movement of component parts of a hydraulic motor in response to a rotation of the eccentric cam.
Fig. 5B shows movement of component parts of the hydraulic motor in response to a rotation of the eccentric cam, with 180 degree phase shift from the case of Fig.5A.
Fig.6A shows a configuration of a working fluid sump in the radial direction of the eccentric cam from the inside.
Fig.6B shows the configuration of the working fluid sump in the circumferential direction of the eccentric cam.
Fig. 7 shows another example configuration of the working fluid sump.
Fig. 8 shows another embodiment in which a slide member is fixed using a clamp member.
Fig. 9 shows another embodiment in which the slide member is supported by a metal insert.

### DESCRIPTION OF EMBODIMENTS

At least one embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

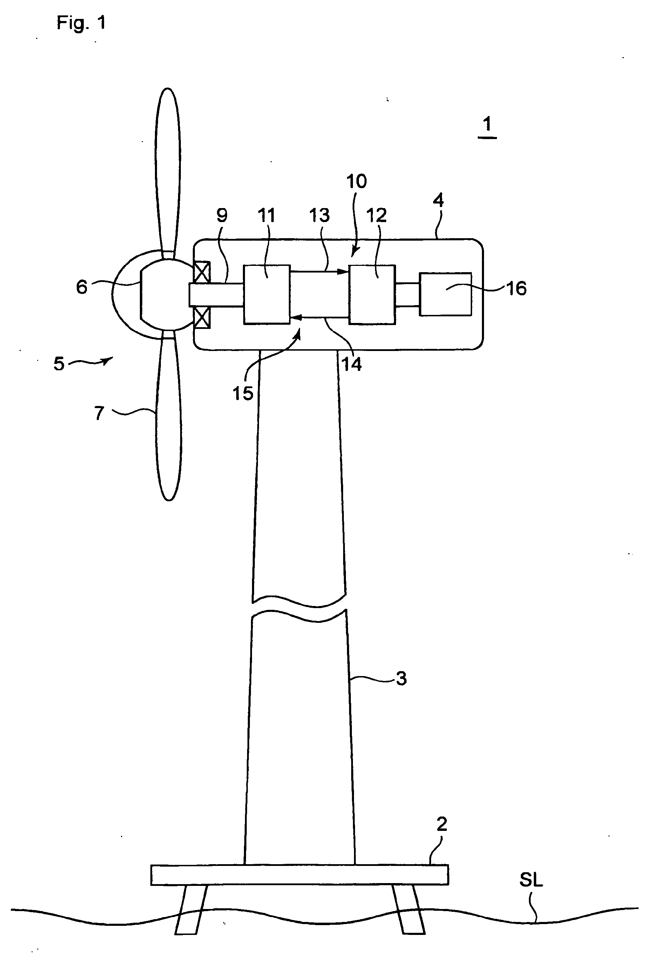

Fig. 1 is a schematic view of an overall structure of a wind turbine generator.

The wind turbine generator 1 is mainly provided with a tower 3 installed on a base 2, a nacelle 4 supported by the tower 3 and a rotor 5 rotating by wind energy.

Fig. 1 shows an exemplary case where the wind turbine generator 1 is installed on a sea level SL as an offshore wind turbine generator and the base 2 is connected to the sea floor. However, the wind turbine generator 1 may be installed on shore.

The rotor 5 is formed with at least one blade 7 (for instance, three blades) and a hub 6 supporting the blade 7. The hub 6 is connected to a rotation shaft 9 housed in the nacelle 4. By this, the rotor 5 rotates upon receiving wind on the blade 7, thereby rotating the rotation shaft 9 connected to the hub 6.

The nacelle 4 houses a hydraulic transmission 10 and a generator 16. The hydraulic transmission 10 includes a hydraulic pump 11 connected to the rotation shaft 9, a hydraulic motor 12 connected to the generator 16, and an oil line 15 provided between the hydraulic pump 11 and the hydraulic motor 12. The oil line 15 is formed by a high pressure oil line 13 for connecting a discharge side of the hydraulic pump 11 to an intake side of the hydraulic motor 12, and a low pressure oil line 14 for connecting a discharge side of the hydraulic motor 12 to an intake side of the hydraulic pump 11.

The hydraulic pump 11 is driven by the rotation shaft 9 to generate operating oil of high pressure. This operating oil of high pressure is supplied to the hydraulic motor 12 via the high pressure oil line 13 to drive the hydraulic motor 12 by the operating oil of high pressure. Meanwhile, the generator 16 connected to the hydraulic motor 12 is driven to generate electric power. The operating oil discharged from the hydraulic motor 12 is supplied to the hydraulic pump 11 via the low pressure oil line 14 to pressurize the operating oil again in the hydraulic pump 11 and then the operating oil having been pressurized is supplied to the hydraulic motor 12.

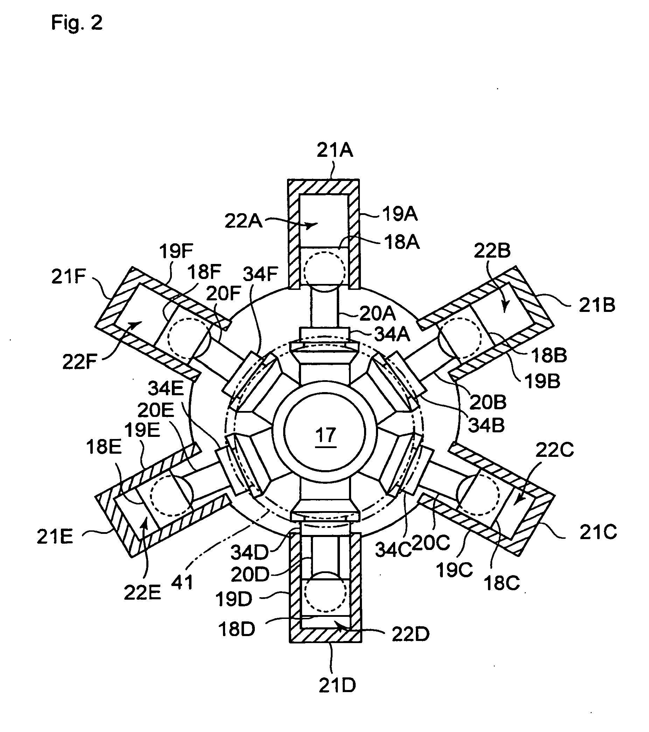

Fig. 2 shows an inner structure of the hydraulic motor 12. In the following descriptions, the hydraulic motor 12 is described as one example of the fluid working machine. However, this is not limitative and the structure is also applicable to hydraulic pump 11.

The hydraulic motor 12 includes an eccentric cam 17 rotating with a rotary shaft of the generator 16, pistons 18A to 18F, cylinders 19A to 19F and drive rods 20A to 20F for transmitting reciprocating motions of the pistons 19A to 19F to the eccentric cam 17. The pistons 18A to 18F and the cylinders 19A to 19F form working chambers 22A to 22F with cylinder heads 21A to 21F, respectively. Although not shown in Fig. 2, the high pressure oil line 13 and the low pressure oil line 14 are connected to each of the working chambers 22A to 22F. By this, supply and discharge of the operating oil in a form of working fluid is performed via a valve mechanism (not shown).

The piston 18A to 18F, the cylinders 19A to 19F and the drive rods 20A to 20F are provided radially around the eccentric cam 17. The pistons 18A to 18F are caused to reciprocate at different phase by the operating oil within the working chambers 22A to 22F and the eccentric cam 17. More specifically, while each of the pistons 18A to 18F moves from a top dead center toward a bottom dead center, the piston 18A to 18F is pressed down toward the eccentric cam 17 along a cylinder axis by the operating oil introduced to the corresponding working chamber 22A to 22F from the high pressure oil line 13. In this process, the drive rod 20A to 20F corresponding to the piston 18A to 18F presses the eccentric cam 17, thereby rotating the eccentric cam 17. Upon rotation of the eccentric cam 17, the piston 18A to 18F positioned near the bottom dead center is pressed up by the eccentric cam 17 via the drive rod 20A to 20F to discharge the operating oil from the working chamber 22A to 22F to the low pressure oil line 14.

By the periodic reciprocation of the pistons 18A to 18F as described above, the rotary shaft of the generator 16 connected to the eccentric cam 17 rotates.

In the following description, the pistons 18A to 18F are collectively described as the piston 18, the cylinders 19A to 19F are collectively described as the cylinder 19, the drive rods 20A to 20F are collectively described as the drive rod 20, the cylinder heads 21A to 21F are collectively described as the cylinder head 21 and the working chambers 22A to 22F are collectively described as the working chamber 22.

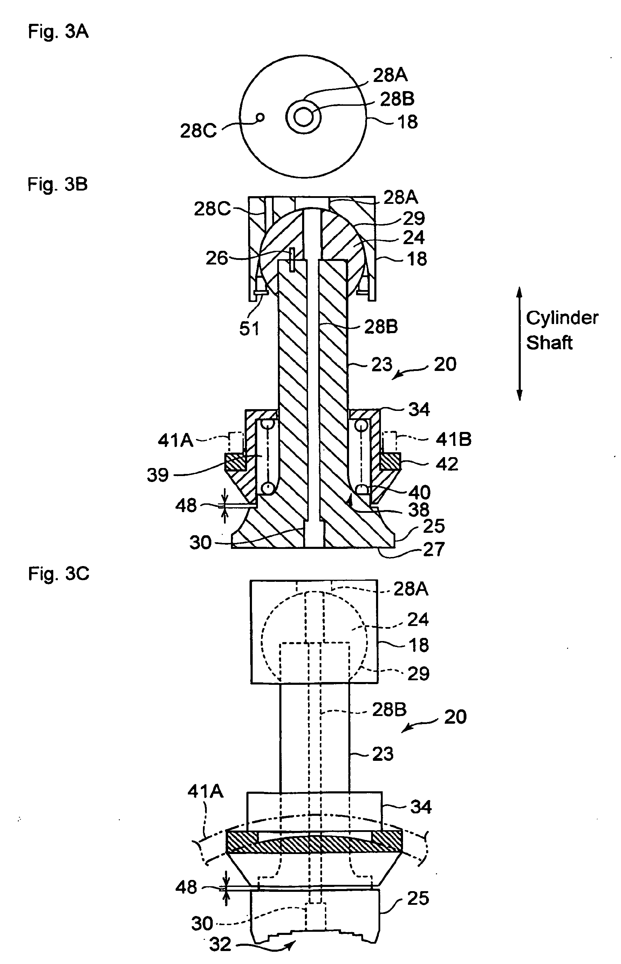

Fig.3A shows a structure around the piston 18 and the drive rod 20 from the outside in a radial direction of the eccentric cam 17. Fig.3B shows the structure around the piston 18 and the drive rod 20 in a circumferential direction of the eccentric cam 17. Fig.3C shows the structure around the piston 18 and the drive rod 20 in a rotational direction of the eccentric cam 17.

The drive rod 20 includes a main part 23 extending along the axial direction of the cylinder 19, an engaging part 24 formed at one end of the main part 23 (on an outer side in the radial direction of the eccentric cam 17), and a contact part 25 formed at the other end of the main part 23 (on an inner side in the radial direction of the eccentric cam 17). The main part 23 extends approximately parallel to the radial direction of the eccentric cam 17 and transmits the reciprocating motion of the piston 18 to the eccentric cam side.

The engaging part 24 functions to engage the main part 23 with the piston 18. The engaging part 24 is configured to be held to the piston 18 by a fixing pin 51 from the inside of the radial direction of the eccentric cam 17. In one embodiment, the engaging part 24 has a spherical shape and is configured so that an angle of the drive rod 20 with respect to the cylinder axis is changeable.

By the contact part 25 coming into contact with the eccentric cam 17, the reciprocating motion of the piston 18 is converted into the rotating motion of the eccentric cam 17. In one embodiment, the contact part 25 is configured with a diameter larger than the main part 23. By this, the pressing force from the eccentric cam 17 can be transmitted evenly to the piston side via the drive rod 20.

The main part 23 and the contact part 25 are formed integrally, whereas the engaging part 24 is formed as a separate member and fixed to the main part 23 by a bolt 26. Alternatively, the main part 23 and the contact part 25 may be formed separately, and the engaging part 24 and the main part 23 may be formed integrally.

The hydraulic motor 12 includes a plurality of holding members 34A to 34F. The holding members 34A to 34F are each arranged around the main part 23 of the drive rod 20 to surround the main part 23, extending along the direction of the cylinder axis. In the following description, the holding members 34A to 34F are collectively described as the holding member 34.

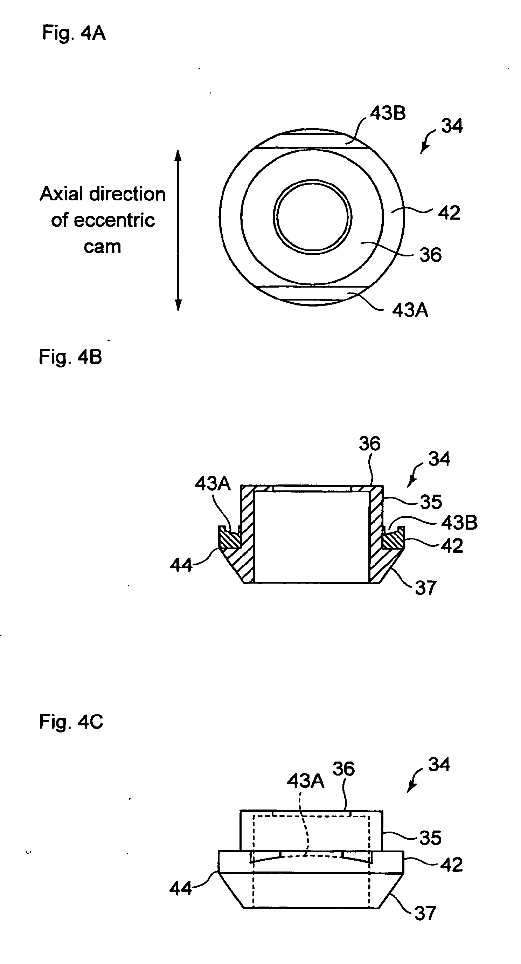

Fig. 4A is a view of a structure of the holding member 34 in the radial direction of the eccentric cam 17 from the outside. Fig. 4B is a view of the structure of the holding member 34 in the circumferential direction of the eccentric cam 17. Fig. 4C is a view of the structure of the holding member 34 in the rotational direction of the eccentric cam 17.

The holding member 34 includes a cylindrical part 35 surrounding the main part 23 of the drive rod 20 while extending in the axial direction of the cylinder, an inward flange part 36 provided at one end of the cylindrical part 35 on an outer circumferential side in the radial direction of the eccentric cam 17, and an outward flange part 37 provided at the other end of the cylindrical part 35 on an inner circumferential side in the radial direction of the eccentric cam 17.

As shown in Fig. 3A to Fig.3C, a stepped portion 38 is formed on an outer wall of the drive rod 20. In an annular space 39 formed by the stepped portion 38 and the holding member 34, a pressing member 40 is arranged. The pressing member 40 is, for instance, a spring member and presses the inward flange part 36 of the holding member 34 in a direction of moving away from the stepped portion 38.

The pressing member 40 is housed in the annular space 39 surrounded by the cylindrical part 35 of the holding member 34. Thus, during the operation of the hydraulic motor 12, it is possible to prevent the pressing member 40 from interfering with nearby parts, thereby achieving an excellent reliability of the machine.

The outward flange part 37 is provided at an inner end of the cylindrical part 35 in the radial direction of the eccentric cam 17 (on a side of the cylindrical part 35 nearer to the eccentric cam 17). Thus, compared to the case where the outward flange part 37 held by the holding ring 41 is formed at an outer end of the cylindrical part 35 in the radial direction of the eccentric cam 17 (on a side of the cylindrical part farther from the eccentric cam 17), the attitude of the holding member 34 held by the holding ring 41 becomes stable.

Further, by forming the outward flange part 37 at the inner end of the cylindrical part 35 in the radial direction of the eccentric cam 17 (on the side of the cylindrical part 35 nearer to the eccentric cam 17), it is possible to reduce the diameter of the holding ring 41 for holding the outward flange part 37, thereby attaining a compact holding ring 41.

Between the outward flange part 37 and the drive rod 20 (the stepped portion 38), a clearance 48 is provided. The clearance is set in advance so that, during the normal operation of the hydraulic motor 12, a small gap (for instance, a few millimeters) is still secured even when the pressing member 40 is in the most compressed state during the operation of the hydraulic motor. In this manner, by providing the clearance 48, it is possible to absorb shock caused by a movement of the holding member 34 along the drive rod 20, which results in wear thereof, and also possible to absorb a manufacturing error of the parts.

In such a case that the hydraulic motor 12 abnormally operates for some reason and the pressing member 40 is deformed beyond an expected range, the outward flange part 37 comes in contact with the drive rod 20 to restrict over-deformation of the pressing member 40. In this manner, even when there is abnormality such as a failure of components, it is possible to restrict the deformation of the pressing member 40 within the expected range and also to prevent the holding ring 41 and the holding member 34 from moving unexpectedly, thereby preventing the abnormality from developing into a significant failure.

A plurality of the pressing member 40 is provided corresponding to the drive rods 20A to 20F. The holding members 34A to 34F are pressed up outwardly in the radial direction of the eccentric cam 17 by the pressing members 40A to 40F while being held inwardly by the holding ring 41. Thus, the drive rods 20A to 20F are pressed against the eccentric cam 17 by reaction from the pressing members 40A to 40F. By this, it is possible to maintain the contact between the drive rods 20A to 20F and the eccentric cam 17 regardless of the rotation phase of the eccentric cam 17. Therefore, it is possible to reduce the wear of the drive rods 20A to 20F as well as the wear of the eccentric cam 17. In the following description, the pressing members 40A to 40F are collectively described as the pressing member 40.

Between the holding ring 41 and the outward flange part 37, a slide member 42 may be provided. As shown in Fig.4A to Fig.4C, the slide member 42 may be formed to surround the cylindrical part 35 along the outward flange part 37. The holding ring 41 is not fixed to the holding member 34 and thus, during the operation of the hydraulic motor 12, the holding ring 41 moves with respect the holding member 34 to some extent in response to the rotation of the eccentric cam 17. For instance, the drive rod 20 contacts the eccentric cam 17 and operates while changing its angle with respect to the cylinder axis. In response to this, the holding ring 41 is subjected to an abrasion force to some extent via the holding member 34 provided on the drive rod 20 and rotates frontward and rearward in the axial direction of the holding ring 41.

The slide member 42 is, for instance, made of PEEK material (Polyether ether ketone). By arranging this slide member 42 between the holding ring 41 and the holding member 34, it is possible to reduce the wear of the holding ring 41 and the holding member 34.

Further, the slide mbmer 42 is attatched to the outward flange part 37 by glue 44.

In the slide member 34, a groove 43 is formed, extending along the circumfernetial direction of the eccentric cam 17. By fitting the holding ring 41 in the groove 43, it is possible to regulate the position of the holding ring 41. By this, during the operation of the hydrulic motor 21, the holding ring 41 is prevented from coming off from the holding member 34. As a result, it is possible to improve the reliability of the machine.

The groove 43 is formed in the outward flange part 37 on both side of the cylindrical part 35, i.e. the grooves 43A and 43B being formed on both sides of the cylinderical part 35, respectively. In each of the grooves 43A, 43B, a corresponding one of the holding rings 41A, 41B is fitted. In this manner, by forming the groove 43 on each side of the cylindrical part 35 so that the holding ring 41 is fit therein, the attitude of the holding member 34 held by the holding ring 41 can be stable.

The holding member 34 and the holding ring 41 are, for instance, made of metal. The holding member 34 may be made of aluminium and the holding ring 41 may be made of iron.

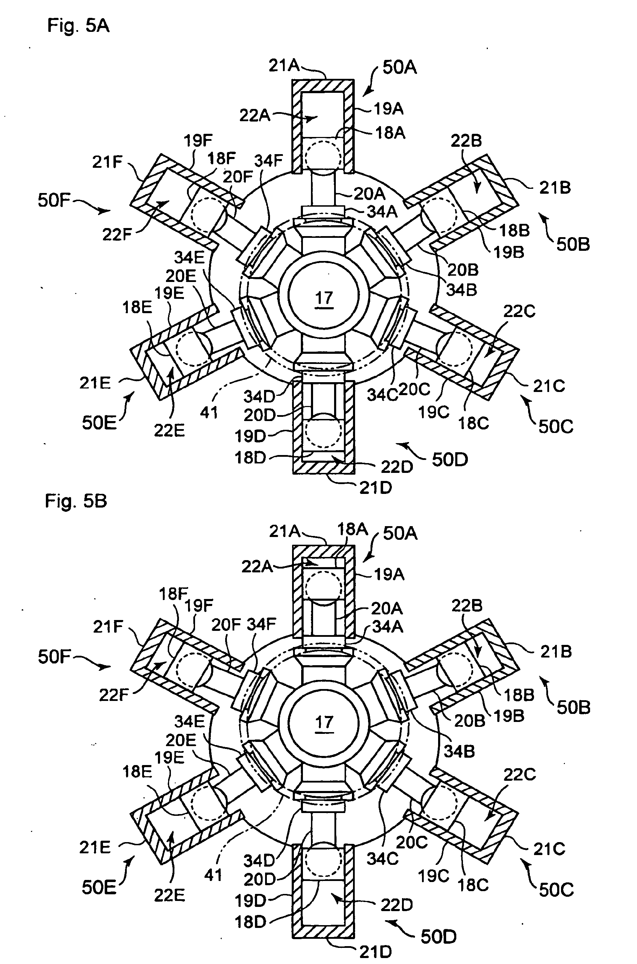

Fig.5A is a schematic view showing movement of component parts in the hydraulic motor 12 in response to the rotation of the eccentric cam 17. Fig. 5B is a schematic view showing movement of the component parts in the hydraulic motor 12 in response to the rotation of the eccentric cam 17 in such a state that the phase of the eccentric cam 17 is shifted by 180 degrees from the case of Fig.5A. To simplify the description, an unit 50A having the piston 18A, the cylinder 19A, the drive rod 20A, the working chamber 22A, the holding member 34A and the pressing member 40A and a unit 50D having the piston 18D, the cylinder 19D, the drive rod 20D, the working chamber 22D, the holding member 34D and the pressing member 40D are explained. The description is, of course, applicable to the other units.

In the embodiment, even numbers of the units are provided. However, this is not limitative and odd numbers of the units may be provided. Further, the units are arranged symmetrically with respect to a center of the eccentric cam 17. However, this is not limitative and the units may be arranged asymmetrically.

Fig.5A is explained below.

In the hydraulic motor 12, the eccentric cam 17 rotates with the rotary shaft of the generator 16. In the unit 50A, the rotation of the eccentric cam 17 presses up the drive rod 20A outwardly in the radial direction of the eccentric cam 17. After being pressed up, the drive rod 20A presses the holding ring 41 outwardly in the radial direction of the eccentric cam 17 via the pressing member 40A. In this manner, the holding ring 41 moves in an upward direction in Fig.5A.

In contrast, in the unit 50D with the phase opposite to the unit 50A, the drive rod 20D is not pressed against the eccentric cam 17 (depending on a situation, the drive rod 20D moves away from the eccentric cam 17). Meanwhile, the holding ring 41 moves in the upward direction in Fig.5A as described above, causing the holding member 34D to be pressed down inwardly in the radial direction of the eccentric cam 17. In this manner, the force acting to press down the holding member 34D is transmitted to the drive rod 20D via the pressing member 34D. By this, the drive rod 20D is pressed against the eccentric cam 17, thereby maintaining the contact therebetween.

Fig.5B is explained below.

In a fashion opposite to Fig.5A, in the unit 50D, the rotation of the eccentric cam 17 presses up the drive rod 20D outwardly in the radial direction of the eccentric cam 17. After being pressed up, the drive rod 20D presses the holding ring 41 via the pressing member 40A outwardly in the radial direction of the eccentric cam 17. In this manner, the holding ring 41 moves in a downward direction in Fig.5B.

In contrast, in the unit 50A with the phase opposite to the unit 50D, the drive rod 20A is not pressed against the eccentric cam 17 (depending on a situation, the drive rod 20A moves away from the eccentric cam 17). Meanwhile, the holding ring 41 moves in the downward direction in Fig.5B as described above, causing the holding member 34A to be pressed down inwardly in the radial direction of the eccentric cam 17. In this manner, the force acting to press down the holding member 34A is transmitted to the drive rod 20A via the pressing member 34A. By this, the drive rod 20A is pressed against the eccentric cam 17, thereby maintaining the contact therebetween.

As shown in Fig.5A and Fig.5B, in response to the rotating motion of the eccentric cam 17, the holding ring 41 rotates around approximately the same axis with the eccentric cam 17. In this manner, the holding ring 41 holds the holding members 34A to 34F pressed up outwardly in the radial direction of the eccentric cam 17 by the pressing members 40A to 40F and the holding ring 41 is not fixed rigidly to any particular part. Therefore, the pressing members 40A to 40F are not compressed or extended significantly in response to the rotation of the eccentric cam 17. Compared to the case where the ends of the pressing members 40A to 40F are rigidly fixed to a particular part, the pressing members 40A to 40F are compressed or extended less. Regardless of the rotation phase of the eccentric cam 17, it is possible to maintain the drive rods 20A to 20F in contact with the eccentric cam 17 with approximately the constant amount of force. As a result, it is possible to reduce the wear of the eccentric cam 17 and the drive rod 20, thereby attaching enhanced lifetime thereof.

Further, by arranging the pressing members 40A to 40F in the hydraulic motor 12, the gap possibly generated between the parts can be filled. Therefore, it is unnecessary to manufacture each of the parts with precision beyond necessity, thereby achieving lower manufacturing cost.

In Fig. 3A to Fig.3C, an inner passage 28 is formed in the piston 18 and the drive rod 20 to supply the operating oil from the working chamber 22 to a contact surface of the drive rod 20 with the eccentric cam 17. The inner passage 28 includes a first inner passage 28A formed in the piston 28, and a second inner passage 28B formed in the drive rod 20. The first inner passage 28A and the second inner passage 28B communicate with each other to supply the operating oil introduced from the working chamber 22 to the contact surface 27.

The first inner passage 28A has a greater cross-sectional area than the second inner passage 28B. By this, even when the drive rod 20 is inclined with respect to the cylinder axis, it is possible to maintain the communication between the first inner passage 28A and the second inner passage 28B. As a result, it is possible to supply the operating oil to the contact surface 27 regardless of the rotation phase of the eccentric cam 17, thereby reducing the wear of the contact surface 27 effectively.

A third inner passage 28C is also formed in the piston 18 to supply the operating oil from the working chamber 22 to an engaging surface 29 which the piston 18 and the drive rod 20 (the engaging part 24) slide against. By this, a fluid film is formed on the engaging surface 29, thereby reducing the wear of the piston 18 and the drive rod 20.

In the second inner passage 28B, an orifice is provided to regulate a flow of the operating oil introduced from the working chamber 22. By this, it is possible to regulate the flow of the operating oil to the contact surface so as to achieve a favorable effect of reducing the wear the contact surface 27.

Further, in the example shown in Fig.3A to Fig.3C, the orifice 30 is provided in the second inner passage 28B. However, this is not limitative and the orifice may be provided in one or both of the second inner passage 28A and the third inner passage 28C instead of or in addition to the second inner passage 28B.

On a surface of the drive rod 20 (the contact part 25) facing the eccentric cam 17, the surface is recessed to form a working sump 32 in an area including the opening 32 of the inner passage 28. In the working sump, the operating oil is supplied from the working chamber 22 via the inner passage 28. The operating oil stored in the working fluid sump 32 leaks about from the working fluid sump 32 to form the fluid film on the contact surface 27. In this manner, the fluid film is formed on the contact surface 27, thereby reducing the wear in the contact surface 27.

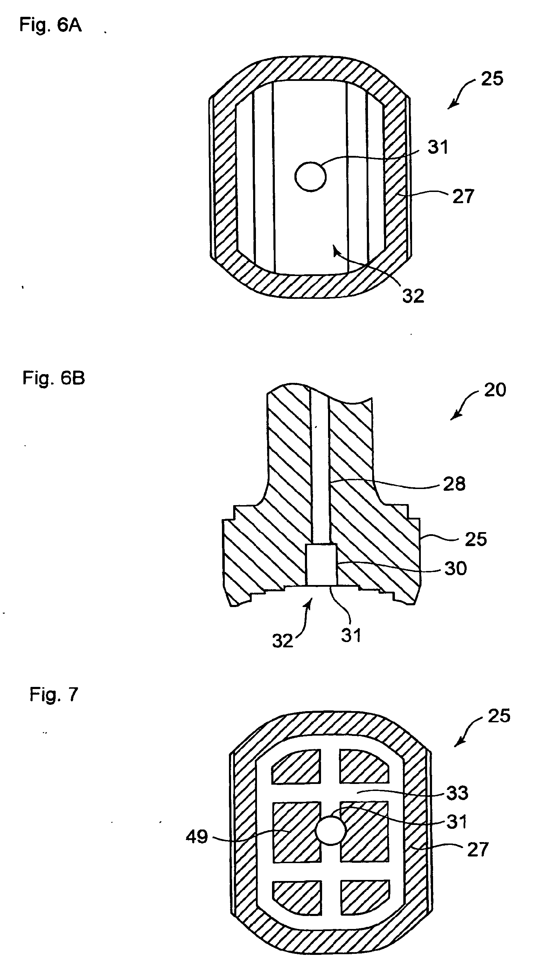

Fig.6A shows a configuration of the working fluid sump 32 in the radial direction of the eccentric cam 17 from the inside. Fig.6B shows the configuration of the working fluid sump 32 in the circumferential direction of the eccentric cam 17. The working fluid sump 32 is formed so that its depth changes in a stepped manner along the circumferential direction of the eccentric cam 17. By this, it is possible to attain high strength of the contact part 25 of the drive rod 20 when the working fluid sump 32 is formed by recessing the surface of the drive rod 20 (the contact pat 25) facing the eccentric cam 17.

Fig. 7 shows another example configuration of the working fluid sump 32. In Fig.7, the working fluid sump 32 may be formed with a groove 33 for communicating with the opening 31 of the inner passage 28. The groove 33 communicates with the opening 31 of the inner passage 28 to supply the operating oil from the working chamber 22. The operating oil leaks out from the groove 33 extending in a prescribed direction, thereby spreading over the contact surface 27. By this, the fluid film is formed on the contact surface 27 and the wear is effectively reduced.

Particularly in the example of Fig.7, the working fluid sump 32 is formed by surrounding a prescribed area of a land 49 by the groove 33. This allows the operating oil supplied to the working fluid sump 32 to spread effectively over a large area of the contact surface 27 and the land 49.

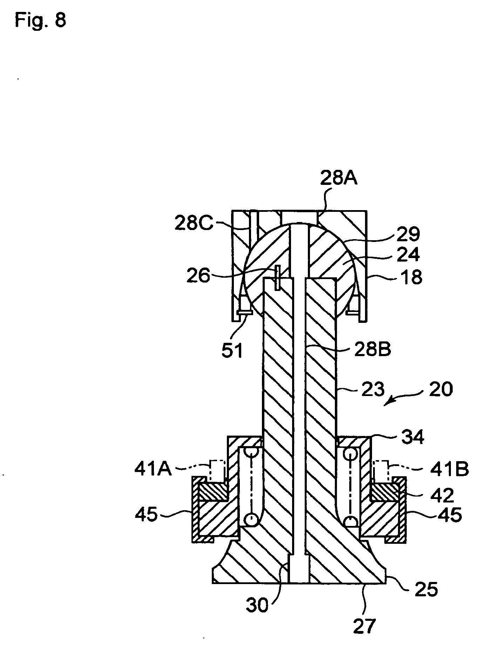

In the above embodiments, the slide member 34 is fixed to the outward flange part 37 by glue 44. However, this is not limitative and instead, the slide member 34 and the outward flange part 37 may be clamped from outside and fixed by a clamp member 45, as shown in Figure 8.

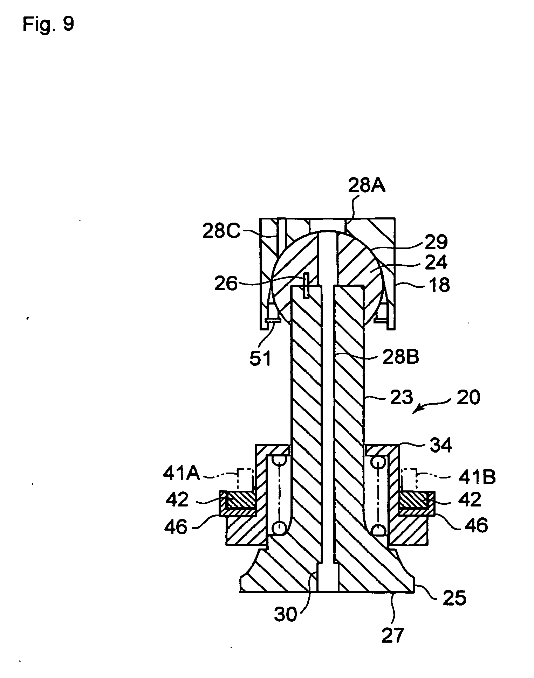

In the embodiment of Figure 9, the slide member 34 is supported by a metal insert 46 located between the slide member 34 and the outward flange part 37 of the holding member 34. Therefore, the slide member 34, made of PEEK is in contact with both the metal insert 46 and the holding ring 41. The metal insert 46 functions to reduce wear on the holding member 34 which might, for example, be made of aluminium.

While the present invention has been described with reference to the exemplary embodiments, it is obvious to those skilled in the art that various changes may be made without departing from the scope of the invention.

### REFERENCE SIGNS LIST

- 1: Wind turbine generator
- 2: Base
- 3: Tower
- 4: Nacelle
- 5: Rotor
- 6: Hub
- 7: Blade
- 9: Rotation shaft
- 10: Hydraulic transmission
- 11: Hydraulic pump
- 12: Hydraulic motor
- 13: High pressure oil line
- 14: Low pressure oil line
- 15: Oil line
- 16: Generator
- 17: Eccentric cam
- 18A-18F: Piston
- 19A-19F: Cylinder
- 20A-20F: Drive rod
- 21A-21F: Cylinder head
- 22A-22F: Working chamber
- 23: Main part
- 24: Engaging part
- 25: Contact part
- 26: Bolt
- 27: Contact surface
- 28A-28C: Inner passage
- 29: Engaging surface
- 30: Orifice
- 31: Opening
- 32: Working fluid sump
- 33: Groove
- 34A-34F: Holding member
- 35: Cylindrical part
- 36: Inward flange part
- 37: Outward flange part
- 38: Stepped portion
- 39: Annular space
- 40A-40F: Pressing member
- 41: Holding ring
- 42: Slide member
- 43: Groove
- 44: Glue
- 45: Clamp member
- 46: Metal insert
- 48: Clearance
- 49: Land
- 50A-50F: Unit
- 51: Fixing pin

## Claims

1. A wind turbine generator (1) comprising:
a hub (6) on which a blade (7) mounted;
a main shaft (9) which is connected to the hub;
a hydraulic pump (11) which is attached to the main shaft;
a hydraulic motor (12) which is driven by pressurized oil supplied from the hydraulic pump; and
a generator (16) which is coupled to the hydraulic motor;
wherein at least one of the hydraulic pump and the hydraulic motor is a fluid working machine which comprises:
an eccentric cam (17);
a plurality of pistons (18A-F) arranged radially around the eccentric cam (17);
a plurality of cylinders (19A-F) provided for the plurality of pistons (19A-F) respectively, each of the pistons being configured to reciprocate along a radial direction of the eccentric cam (17) by rotation of the eccentric cam;
a plurality of drive rods (20A-F) which are provided for the plurality of cylinders (19A-F), respectively, and each of which comprises:
a main part (23) that extends along the axial direction of corresponding one of the
cylinders;
an engaging part (24) that is formed at one end of the main part and is engaged
with corresponding one of the pistons such that an angle of the main part (23) with respect to the axial direction of the corresponding one of the cylinders
is changeable; and
a contact part (25) that is formed at the other end of the main part and contacts
the eccentric cam (17), **characterized in that** the fluid working machine further comprises:
a plurality of holding members (34A-F) each of which is arranged around the main part (23) in a circumferential direction of the corresponding one of the cylinders and extends along the axial direction of the corresponding one of the cylinders,
wherein each of the holding members (34A-F) comprises a cylindrical part (35) surrounding the main part (23) and an outward flange part (37) provided at one end of the cylindrical part on an inner circumferential side in the radial direction of the eccentric cam;
a plurality of pressing members (40) which presses the holding members (34A-F) respectively, outward in the radial direction of the eccentric cam (17);
at least one holding ring (41) which is arranged on an outer circumferential side of the plurality of holding members in the radial direction of the eccentric cam to hold the plurality of holding members from an outside of the holding members,
wherein the at least one holding ring (41) holds the outward flange part (37) of each of the holding members (34A-F), and
a plurality of slide members (34) each of which is provided between the holding ring (41) and the outward flange part (37) of corresponding one of the holding members (34A-F).

2. The wind turbine generator according to claim 1,
wherein each of the holding members comprises a cylindrical part surrounding the main part and an inward flange part provided at one end of the cylindrical part on an outer circumferential side in the radial direction of the eccentric cam,
wherein the contact part has a diameter larger than the main part so that a stepped portion is formed between the contact part and the main part,
wherein each of the pressing members is arranged in an annular space formed between an inner circumferential surface of the cylindrical part and an outer circumferential surface of the main part to press the inward flange part in a direction apart from the stepped portion.

3. The wind turbine generator according to claim 1, wherein each of the slide members is arranged around the cylindrical part and comprises at least one groove extending along the circumferential direction of the eccentric cam, and
wherein the at least one holding ring is fitted in the at least one groove.

4. The wind turbine generator according to claim 3,
wherein the at least one groove comprises a pair of grooves on both sides of the
cylindrical part, and
wherein the at least one holding ring comprises a pair of holding rings which are
fitted in the pair of grooves, respectively.

5. The wind turbine generator according to claim 1,
wherein each of the slide members is fixed to the outward flange part of the
corresponding one of the holding members by a clamp member or glue.

6. The wind turbine generator according to claim 1,
wherein each of the slide members is arranged around the holding member in a
continuous fashion in the circumferential direction of the corresponding one of the cylinders.

7. The wind turbine generator according to claim 1,
wherein each of slide members is made of PEEK material.

8. The wind turbine generator according to claim 1,
wherein an inner passage is formed in the piston and the drive rod to supply
working fluid from the working chamber to a contact surface of the contact part with the eccentric cam.

9. The wind turbine generator according to claim 8,
wherein an orifice is provided in the inner passage to regulate a flow of the
working fluid.

10. The wind turbine generator according to claim 8,
wherein the inner passage comprises:
a first inner passage which is formed in the piston; and
a second inner passage which is formed in the drive rod and communicate
with the first inner passage, the working fluid being supplied from the working chamber to the contact surface via the first and second inner passages, and
wherein the first inner passage has a greater cross-sectional area than the second
inner passage.

11. The wind turbine generator according to claim 8,
wherein a surface of the drive rod facing the eccentric cam includes a recessed
portion which is surrounded by a stepped boundary around an opening of the inner passage and which is configured to function as a working fluid sump, the stepped boundary separating the recessed portion from the contact surface.

12. The wind turbine generator according to claim 11,
wherein the working fluid sump is formed so that a depth of the working fluid
sump changes in a stepped manner in a rotation direction of the eccentric cam.

13. The wind turbine generator according to claim 8,
wherein a surface of the drive rod facing the eccentric cam includes a groove to
which the inner passage opens and which is configured to function as a working fluid sump.

14. The wind turbine generator according to claim 13,
wherein the groove surrounds a land.

15. The wind turbine generator according to claim 1,
wherein the engaging part has a spherical shape.

16. The wind turbine generator according to claim 1,
wherein the plurality of holding members and the holding ring are made of metal.

17. The wind turbine generator according to claim 1, further comprising a metal insert between each slide member and the respective outward flange part.

## Patentansprüche

1. Windenergieanlage (1), umfassend:
eine Nabe (6), auf der eine Schaufel (7) montiert ist;
eine Hauptwelle (9), die mit der Nabe verbunden ist;
eine Hydraulikpumpe (11), die an der Hauptwelle befestigt ist;
einen Hydraulikmotor (12), der durch druckbeaufschlagtes Öl angetrieben wird, das aus der Hydraulikpumpe zugeführt wird; und
einen Generator (16), der mit dem Hydraulikmotor gekoppelt ist;
wobei mindestens die Hydraulikpumpe oder der Hydraulikmotor eine Fluidarbeitsmaschine sind, die umfasst:
einen exzentrischen Nocken (17);
mehrere Kolben (18A-F), die radial um den exzentrischen Nocken (17) angeordnet sind;
mehrere Zylinder (19A-F), die für die mehreren Kolben (18A-F) bereitgestellt sind, wobei jeder der Kolben zum Hin- und Herbewegen entlang einer radialen Richtung des exzentrischen Nocken (17) durch die Drehung des exzentrischen Nocken konfiguriert ist;
mehrere Antriebsstangen (20A-F), die für die mehreren Zylinder (19A-F) bereitgestellt sind, die jeweils umfassen:
ein Hauptteil (23), das sich entlang der axialen Richtung des jeweils zugehörigen Zylinders erstreckt;
ein Eingriffsteil (24), das an einem Ende des Hauptteils (23) ausgebildet ist und in den jeweils zugehörigen Kolben eingreift, sodass ein Winkel des Hauptteils in Bezug auf die axiale Richtung des jeweils zugehörigen der Zylinder veränderbar ist; und
ein Kontaktteil (25), das am anderen Ende des Hauptteils ausgebildet ist und in Kontakt mit dem exzentrischen Nocken (17) tritt; **dadurch gekennzeichnet, dass** die Fluidarbeitsmaschine ferner umfasst:
mehrere Halteelemente (34A-F), die jeweils um das Hauptteil (23) in einer Umfangsrichtung des zugehörigen Zylinders angeordnet sind und sich entlang der axialen Richtung des jeweils zugehörigen Zylinders erstrecken, wobei jedes der Halteelemente (34A-F) ein zylindrisches Teil 35 umfasst, welches das Hauptteil (23) umgibt und ein nach außen gerichtetes Flanschteil 37 an einem Ende des zylindrischen Teils auf einer Innenumfangsseite in radialer Richtung des exzentrischen Nocken bereitgestellt ist;
mehrere Presselemente (10), welche die Halteelemente (34A-F) jeweils nach außen in radialer Richtung des exzentrischen Nocken (17) pressen;
mindestens einen Haltering (41), der auf einer Außenumfangsseite der mehreren Halteelemente in radialer Richtung des exzentrischen Nocken angeordnet ist, um die mehreren Halteelemente von einer Außenseite der Halteelemente zu halten, wobei der mindestens eine Haltering (41) den nach außen gerichteten Flansch (37) jedes der Halteelemente (34A-F) hält; und
mehrere Gleitelemente (34), die jeweils zwischen dem Haltering (41) und dem nach außen gerichteten Flanschteil (37) des jeweils zugehörigen Halteelements (34A-F) bereitgestellt sind.

2. Windenergieanlage nach Anspruch 1,
wobei jedes der Halteelemente ein zylindrisches Teil umfasst, welches das Hauptteil und ein nach innen gerichtetes Flanschteil umgibt, das an einem Ende des zylindrischen Teils an einer Außenumfangsseite in radialer Richtung des exzentrischen Nocken bereitgestellt ist,
wobei das Kontaktteil einen Durchmesser aufweist, der größer als das Hauptteil ist, sodass ein abgestufter Abschnitt zwischen dem Kontaktteil und dem Hauptteil ausgebildet wird,
wobei jedes der Presselemente in einem ringförmigen Raum angeordnet ist, der zwischen einer Innenumfangsoberfläche des zylindrischen Teils und einer Außenumfangsoberfläche des Hauptteils ausgebildet ist, um das nach innen gerichtete Flanschteil in eine Richtung zu pressen, die weg von dem abgestuften Abschnitt weist.

3. Windenergieanlage nach Anspruch 1, wobei jedes der Gleitelemente um das zylindrische Teil angeordnet ist und mindestens eine Nut umfasst, die sich entlang der Umfangsrichtung des exzentrischen Nocken erstreckt und
wobei der mindestens eine Haltering in die mindestens eine Nut eingepasst ist.

4. Windenergieanlage nach Anspruch 3,
wobei die mindestens eine Nut ein Paar von Nuten auf beiden Seiten des zylindrischen Teils umfasst, und
wobei der mindestens eine Haltering ein Paar von Halteringen umfasst, das jeweils in das Paar von Nuten eingepasst ist.

5. Windenergieanlage nach Anspruch 1, wobei jedes der Gleitelemente an dem nach außen gerichteten Flanschteil des jeweils zugehörigen Halteelements über ein Klemmelement oder Verkleben befestigt ist.

6. Windenergieanlage nach Anspruch 1, wobei jedes der Gleitelemente durchgehend in Umfangsrichtung des jeweils zugehörigen Zylinders um das Halteelement angeordnet ist.

7. Windenergieanlage nach Anspruch 1,
wobei jedes der Gleitelemente aus PEEK-Material hergestellt ist.

8. Windenergieanlage nach Anspruch 1,
wobei ein Innenkanal in dem Kolben und der Antriebsstange ausgebildet ist, um Arbeitsfluid aus einer Arbeitskammer zu einer Kontaktoberfläche des Kontaktteils mit dem exzentrischen Nocken zuzuführen.

9. Windenergieanlage nach Anspruch 8,
wobei eine Öffnung in dem Innenkanal zum Regeln einer Strömung von Arbeitsfluid bereitgestellt ist.

10. Windenergieanlage nach Anspruch 8,
wobei der Innenkanal umfasst:
einen ersten Innenkanal, der in dem Kolben ausgebildet ist; und
einen zweiten Innenkanal, der in der Antriebsstange ausgebildet ist und mit dem ersten Innenkanal kommuniziert, wobei das Arbeitsfluid aus der Arbeitskammer zu der Kontaktoberfläche über den ersten und zweiten Innenkanal zugeführt wird und
wobei der erste Innenkanal einen größeren Querschnittsbereich als der zweite Innenkanal aufweist.

11. Windenergieanlage nach Anspruch 8,
wobei eine Oberfläche der Antriebsstange, die zum exzentrischen Nocken weist, einen ausgesparten Abschnitt aufweist, der von einer abgestuften Grenze um eine Öffnung des Innenkanals umgeben ist und der als Arbeitsfluidsumpf dient, wobei die abgestufte Grenze den ausgesparten Abschnitt von der Kontaktoberfläche trennt.

12. Windenergieanlage nach Anspruch 11,
wobei der Arbeitsfluidsumpf derart ausgebildet ist, dass sich ein Arbeitsfluidsumpf in Abstufungen in Drehrichtung des exzentrischen Nocken verändert.

13. Windenergieanlage nach Anspruch 8,
wobei eine Oberfläche der Antriebsstange, die zum exzentrischen Nocken weist, eine Nut aufweist, zu welcher der Innenkanal öffnet und die zum Dienen als Arbeitsfluidsumpf konfiguriert ist.

14. Windenergieanlage nach Anspruch 13, wobei die Nut eine Anlagefläche umgibt.

15. Windenergieanlage nach Anspruch 1, wobei das Eingriffsteil eine Kugelform aufweist.

16. Windenergieanlage nach Anspruch 1,
wobei mehreren Halteelemente und der Haltering aus Metall hergestellt sind.

17. Windenergieanlage nach Anspruch 1, ferner umfassend einen Metalleinsatz zwischen jedem Gleitelement und dem jeweils nach außen gerichteten Flanschteil.

## Revendications

1. Générateur à turbine éolienne (1) comprenant :
un moyeu (6) sur lequel une aube (7) est fixée ;
un arbre principal (9) relié au moyeu ;
une pompe hydraulique (11) fixée à l'arbre principal ;
un moteur hydraulique (12) entraîné par de l'huile sous pression amenée par la pompe hydraulique ; et
un générateur (16) couplé au moteur hydraulique ;
dans lequel au moins un élément parmi la pompe hydraulique et le moteur hydraulique est une machine actionnée par fluide qui comprend :
une came excentrique (17) ;
une pluralité de pistons (18A-F) agencés dans le plan radial autour de la came excentrique (17) ;
une pluralité de cylindres (19A-F) prévus pour la pluralité de pistons (18A-F), respectivement,
chacun des pistons étant configuré pour effectuer un mouvement de va-et-vient le long d'une direction radiale de la came excentrique (17) par rotation de la came excentrique ;
une pluralité de tiges d'entraînement (20A-F) prévues pour la pluralité de cylindres (19A-F), respectivement, et dont chacune comprend :
une partie principale (23) qui s'étend le long de la direction axiale du cylindre correspondant ;
une partie d'engrenage (24) formée à une extrémité de la partie principale et s'engrenant avec le piston correspondant de telle sorte qu'un angle de la partie principale (23) peut être modifié par rapport à la
direction axiale du cylindre correspondant ; et une partie de contact (23) formée au niveau de l'autre extrémité de la partie principale et
entrant en contact avec la came excentrique (17) ;
**caractérisé en ce que** la machine actionnée par fluide comprend en outre :
une pluralité d'éléments de maintien (34A-F) donc chacun est agencé autour de la partie principale (23) dans une direction circonférentielle du cylindre correspondant et s'étend le long de la direction axiale du cylindre correspondant ;
dans lequel chacun des éléments de maintien (34A-F) comprend une partie cylindrique (35) entourant la partie principale (23) et une partie de bride (37) orientée vers l'extérieur prévue à une extrémité de la partie cylindrique sur un côté circonférentiel intérieur, dans la direction radiale de la came excentrique ;
une pluralité d'éléments de pression (10) qui comprime les éléments de maintien (34A-F), respectivement, vers l'extérieur dans la direction radiale de la came excentrique (17) ;
au moins une bague de maintien (41) qui est agencée sur un côté circonférentiel extérieur de la pluralité d'éléments de maintien dans la direction radiale de la came excentrique pour maintenir la pluralité d'éléments de maintien depuis l'extérieur des éléments de maintien, dans lequel l'au moins une bague de maintien (41) maintient la partie de bride (37) orientée vers l'extérieur de chacun des éléments de maintien (34A-F) ; et
une pluralité d'éléments coulissants (34) dont chacun est prévu entre la bague de maintien (41) et la partie de bride (37) orientée vers l'extérieur de l'élément de maintien (34A-F) correspondant.

2. Générateur à turbine éolienne selon la revendication 1 :
dans lequel chacun des éléments de maintien comprend une partie cylindrique entourant la partie principale et une partie de bride orientée vers l'intérieur prévue à une extrémité de la partie cylindrique sur un côté circonférentiel extérieur, dans la direction radiale de la came excentrique ;
dans lequel la partie de contact a un diamètre supérieur à la partie principale de sorte qu'une partie échelonnée est formée entre la partie de contact et la partie principale ;
dans lequel chacun des éléments de pression est agencé dans un espace annulaire formé entre une surface intérieure circonférentielle de la partie cylindrique et une surface circonférentielle extérieure de la partie principale pour compresser la partie de bride orientée vers l'intérieur dans une direction s'écartant de la partie échelonnée.

3. Générateur à turbine éolienne selon la revendication 1, dans lequel chacun des éléments coulissants est agencé autour de la partie cylindrique et comprend au moins une gorge s'étendant le long de la direction circonférentielle de la came excentrique ; et dans lequel l'au moins une bague de maintien est ajustée dans l'au moins une gorge.

4. Générateur à turbine éolienne selon la revendication 3,
dans lequel l'au moins une gorge comprend une paire de gorges sur les deux côtés de la partie cylindrique ; et dans lequel l'au moins une bague de maintien comprend une paire de bagues de maintien ajustées dans la paire de gorges, respectivement.

5. Générateur à turbine éolienne selon la revendication 1, dans lequel chacun des éléments coulissants est fixé à la partie de bride orientée vers l'extérieur de l'élément de maintien correspondant par un élément de serrage ou de la colle.

6. Générateur à turbine éolienne selon la revendication 1, dans lequel chacun des éléments coulissants est agencé autour de l'élément de maintien de façon continue dans la direction circonférentielle du cylindre correspondant.

7. Générateur à turbine éolienne selon la revendication 1, dans lequel chacun des éléments coulissants est fabriqué à partir d'un matériau PEEK.

8. Générateur à turbine éolienne selon la revendication 1, dans lequel un passage intérieur est formé dans le piston et la tige d'entraînement pour amener le fluide de la chambre de travail à une surface de contact de la partie de contact avec la came excentrique.

9. Générateur à turbine éolienne selon la revendication 8, dans lequel un orifice est prévu dans le passage intérieur pour réguler un flux du fluide de travail.

10. Générateur à turbine éolienne selon la revendication 8, dans lequel le passage intérieur comprend :
un premier passage intérieur qui est formé dans le piston ; et
un second passage intérieur qui est formé dans la tige d'entraînement et communique avec le premier passage intérieur, le fluide de travail étant amené de la chambre de travail à la surface de contact
via les premier et second passages intérieurs ; et dans lequel le premier passage intérieur a une aire supérieure en section transversale au second passage intérieur.

11. Générateur à turbine éolienne selon la revendication 8, dans lequel une surface de la tige d'entraînement faisant face à la came excentrique comprend une partie renfoncée entourée par une frontière échelonnée autour d'une ouverture du passage intérieur et configurée pour servir de carter de fluide de travail, la frontière échelonnée séparant la partie renfoncée de la surface de contact.

12. Générateur à turbine éolienne selon la revendication 11, dans lequel le carter de fluide de travail est formé de sorte qu'une profondeur du carter de fluide de travail change de façon échelonnée dans une direction de rotation de la came excentrique.

13. Générateur à turbine éolienne selon la revendication 8, dans lequel une surface de la tige d'entraînement faisant face à la came excentrique comprend une gorge vers laquelle le passage intérieur s'ouvre et configurée pour servir de carter de fluide de travail.

14. Générateur à turbine éolienne selon la revendication 13, dans lequel la gorge entoure un cordon.

15. Générateur à turbine éolienne selon la revendication 1, dans lequel la partie d'engrenage a une forme sphérique.

16. Générateur à turbine éolienne selon la revendication 1, dans lequel la pluralité d'éléments de maintien et la bague de maintien sont fabriquées en métal.

17. Générateur à turbine éolienne selon la revendication 1, comprenant en outre un insert métallique entre chaque élément coulissant et la partie de bride orientée vers l'extérieur respective.
